# EUROPEAN PATENT APPLICATION

(11) **EP 4 668 966 A1**
(43) Date of publication of application: **24.12.2025**
(21) Application number: 23921917.3
(22) Date of filing: 16.02.2023
(51) Int. Cl.: H04W 72/21

(54) **UPLINK TRANSMISSION METHOD AND APPARATUS, DEVICE, MEDIUM AND PROGRAM PRODUCT**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2023/076622
(87) International publication number: WO 2024/168763

(57) **Abstract**

The disclosure belongs to the field of communications. Disclosed are an uplink transmission method and apparatus, a device, a medium, and a program product, the method comprising: a terminal, on at least two time domain positions, performing repeated transmission on at least one uplink channel among at least two uplink channels, and on at least one time domain position among the at least two time domain positions, performing simultaneous transmission across multi-panel on the at least two uplink channels, the at least two uplink channels corresponding to at least two pieces of beam information on a one-to-one basis. The method supports the repeated transmission of uplink channels on time-domains while supporting the simultaneous transmission across multi-panel.

## Description

### TECHNICAL FIELD

The disclosure relates to the field of communications, and in particular relates to an uplink transmission method, an apparatus, a device, a medium and a program product.

### BACKGROUND

In order to ensure the reliability and throughput rate of transmission, in the related art, simultaneous transmission across multi-panel (STxMP) is implemented via a plurality of panels on a terminal towards a plurality of transmission and reception points (TRPs).

In the enhancement research of the STxMP, for the physical uplink shared channel (PUSCH) scheduled by single-downlink control information (S-DCI), an uplink space division multiplexing (SDM) transmission scheme and a single frequency network (SFN) SDM transmission scheme are supported. For the physical uplink control channel (PUCCH) scheduled by S-DCI, the SFN-based transmission scheme is supported.

### SUMMARY

Embodiments of the disclosure provide an uplink transmission method, an apparatus, a device, a medium and a program product, which supports a STxMP and a repetition transmission of an uplink channel on a time-domain.

According to a first aspect of embodiments of the disclosure, there is provided an uplink transmission method, performed by a terminal, including:
performing a repetition transmission on at least one uplink channel among at least two uplink channels on at least two time-domain positions, and performing a STxMP on the at least two uplink channels on at least one time-domain position among the at least two time-domain positions;
in which the at least two uplink channels correspond one-to-one to at least two pieces of beam information, and the beam information is at least one of an antenna panel, a TRP, or a beam.

According to a second aspect of embodiments of the disclosure, there is provided an uplink transmission apparatus, including:
a sending module configured to perform a repetition transmission on at least one uplink channel among at least two uplink channels on at least two time-domain positions, and perform a STxMP on the at least two uplink channels on at least one time-domain position among the at least two time-domain positions; in which the at least two uplink channels correspond one-to-one to at least two pieces of beam information, and the beam information is at least one of an antenna panel, a TRP, or a beam.

According to a third aspect of embodiments of the disclosure, there is provided a terminal, including:
a processor; and
a transceiver connected to the processor;
in which the processor is configured to load and execute executable instructions to implement the uplink transmission method as described in various aspects above.

According to a fourth aspect of embodiments of the disclosure, there is provided a chip, in which the chip includes a programmable logic circuit and/or program instructions, and when the chip runs, the chip is configured to implement the uplink transmission method as described in various aspects above.

According to a fifth aspect of embodiments of the disclosure, there is provided a computer-readable storage medium storing at least one instruction, at least one program, a code set or an instruction set, in which the at least one instruction, the at least one program, the code set or the instruction set is loaded and executed by a processor to implement the uplink transmission method as described in various aspects above.

According to a sixth aspect of embodiments of the disclosure, there is provided a computer program product or a computer program, which includes computer instructions stored in a computer-readable storage medium. A processor of a computer device reads the computer instructions from the computer-readable storage medium, and the processor executes the computer instructions to cause the computer device to execute the uplink transmission method as described in various aspects above.

The technical solutions according to embodiments of the disclosure may include the following advantageous effects.

In the uplink transmission method provided by the disclosure, the associated at least two uplink channels are transmitted via the at least two pieces of beam information on the at least one time-domain position among the at least two time-domain positions to implement the STxMP for the uplink channel. The at least one uplink channel among the at least two uplink channels is transmitted on each of the at least two time-domain positions to implement the repetition transmission for the uplink channel. The method not only supports the transmission scheme of the STxMP, but also further supports the repetition transmission of the same uplink channel in the time-domain, which implements a mixed transmission scheme combining the STxMP and the repetition transmission. This scheme is used to support better reliability and uplink coverage performance, and may also achieve the effect of enhancing uplink throughput under reasonable scheduling of the system.

### BRIEF DESCRIPTION OF THE DRAWINGS

In order to clearly illustrate technical solutions in embodiments of the disclosure, a brief introduction of drawings to be used in descriptions of embodiments of the disclosure is given below. Obviously, the drawings in the following descriptions only show some embodiments of the disclosure, and for those skilled in the art, other drawings may be obtained according to these drawings without creative labor.
FIG. 1 is a schematic diagram illustrating a communication system according to an example embodiment of the disclosure.
FIG. 2 is a schematic diagram illustrating a communication system according to another example embodiment of the disclosure.
FIG. 3 is a schematic diagram illustrating a communication system according to further another example embodiment of the disclosure.
FIG. 4 is a schematic diagram illustrating an uplink transmission process according to an example embodiment of the disclosure.
FIG. 5 is a schematic diagram illustrating an uplink transmission process according to another example embodiment of the disclosure.
FIG. 6 is a schematic diagram illustrating an uplink transmission method according to an example embodiment of the disclosure.
FIG. 7 is a flow chart illustrating an uplink transmission method according to another example embodiment of the disclosure.
FIG. 8 is a schematic diagram illustrating a type of a repetition transmission according to an example embodiment of the disclosure.
FIG. 9 is a schematic diagram illustrating a type of a repetition transmission according to another example embodiment of the disclosure.
FIG. 10 is a schematic diagram illustrating a type of a repetition transmission according to further another example embodiment of the disclosure.
FIG. 11 is a schematic diagram illustrating a type of a repetition transmission according to yet another example embodiment of the disclosure.
FIG. 12 is a schematic diagram illustrating a type of a repetition transmission according to yet another example embodiment of the disclosure.
FIG. 13 is a block diagram illustrating an uplink transmission apparatus according to an example embodiment of the disclosure.
FIG. 14 is a schematic diagram illustrating a terminal according to an example embodiment of the disclosure.
FIG. 15 is a schematic diagram illustrating a network device according to an example embodiment of the disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with some aspects related to the disclosure as recited in the appended claims. In the description of the disclosure, unless otherwise stated, "/" means "or", for example, A/B may mean A or B. The term "and/or" used herein describes an associated relationship of associated objects, and means that there may be three relationships, for example, the expression "A and/or B" may represent the following three cases: A exists alone, A and B exist at the same time, and B exists alone.

Terms used in the disclosure are only for the purpose of describing specific embodiments, but should not be construed to limit the disclosure. As used in the disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in the disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the disclosure. As used herein, the term "if" may be construed to mean "when" or "upon" or "in response to determining" depending on the context.

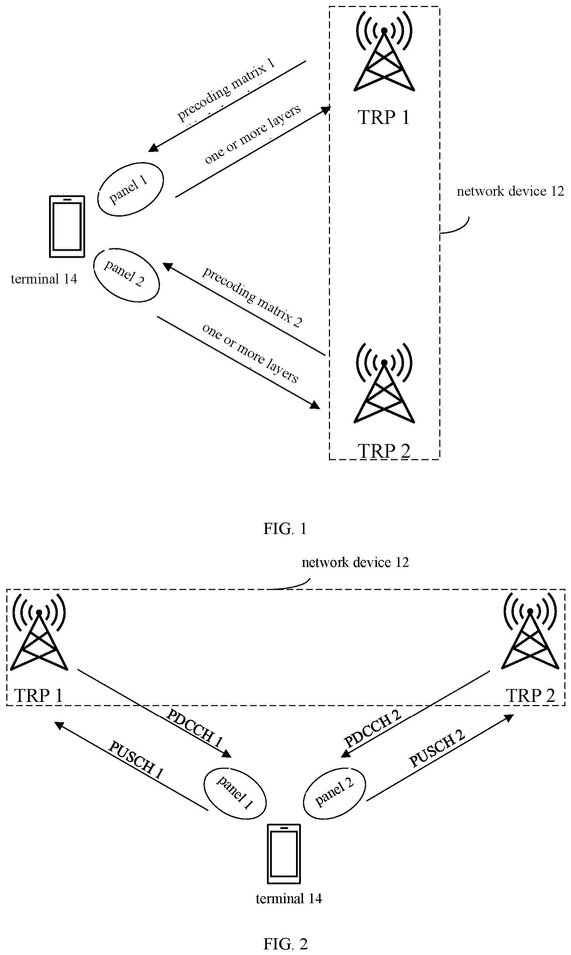

FIG. 1 is a schematic diagram illustrating a communication system according to an example embodiment of the disclosure. The communication system may include: a network device 12 and a terminal 14, and the network device 12 includes a TRP1 and a TRP 2.

The network device 12 may be a base station, which is an apparatus that provides a wireless communication function for the terminal 14. The base station may include various forms of macro base stations, micro base stations, relay stations, access points, and the like. In systems using different radio access technologies, names of devices with functions of the base station may be different. For example, in a long term evolution (LTE) system, it is called an evolved base station (eNodeB, eNB); and in a 5G new radio (NR) system, it is called a next generation base station (gNodeB, gNB). With the evolution of communication technologies, the expression of "base station" may change. For convenience of description in embodiments of the disclosure, the above apparatuses providing the wireless communication function for the terminal 14 are collectively referred to as the network device 12.

The terminal 14 may include various hand-held devices, in-vehicle devices, wearable devices, computing devices or other processing devices connected to a wireless modem devices with the wireless communication function, as well as various forms of user equipment (UE), mobile stations (MSs), terminal devices, and the like. For convenience of description, the above devices are collectively referred to as the terminal.

For example, there are two communication scenarios between the network device 12 and the terminal 14: an uplink communication scenario and a downlink communication scenario. The uplink communication refers to the terminal 14 sending a signal to the network device 12, and the downlink communication refers to the network device 12 sending a signal to the terminal 14.

For the uplink, for a PUSCH oriented to different TRPs, actually passed channel(s) may have significantly different spatial characteristics. Therefore, it is considered that a spatial reception parameter (such as Quasi CoLocation-typeD (QCL-D)) of PUSCHs in different transmission directions are different.

Release-15 (R15)/Release-16 (R16) did not consider a multi-TRP (M-TRP) scenario, and the uplink was transmitted via a single TRP. Release-17 (R17) has enhanced M-TRP uplink transmission under S-DCI, enabling an uplink PUSCH transmission towards a plurality of TRPs. In the third generation partnership project (3GPP) R17, a cooperative transmission under the time division multiplexing (TDM) transmission mode was mainly standardized. This involves the repetition transmission of the same information on the PUSCH to different TRPs in a time division manner via different transmission occasions (TOs) in the time-domain. This method has a relatively low requirement on the capability of the terminal, does not require an ability to support simultaneous beam transmission, and has a relatively large transmission delay.

In the enhancement target of Release-18 (R18), the main expectation is to achieve simultaneous cooperative transmission towards a plurality of TRPs via a plurality of panels of the terminal, so as to increase the transmission reliability and throughput rate, and may also effectively reduce the transmission delay under the plurality of TRPs. However, this requires the terminal to have the capability of sending a plurality of beams simultaneously. The PUSCH may be, based on the plurality of panels scheduled by a single physical downlink control channel (PDCCH), i.e., S-DCI, transmitted to the plurality of TRPs, as shown in FIG. 1.

As shown in FIG. 1, a precoding matrix 1 and a precoding matrix 2 are directly or indirectly scheduled to the terminal by one piece of DCI. The terminal 14 sends uplink data of one or more layers to a TRP 1 using a panel 1 based on the precoding matrix 1. The terminal 14 sends uplink data of one or more layers to a TRP 1 using a panel 2 based on the precoding matrix 2.

Transmission of the PUSCH may also be based on a plurality of panels scheduled by different PDCCHs, i.e., multi-downlink control information (M-DCI), for transmission to a plurality of TRPs, as shown in FIG. 2.

As shown in FIG. 2, a TRP 1 sends first DCI to a terminal 14 via a PDCCH 1, to schedule the terminal 14 to use a panel 1 to send a PUSCH 1 to the TRP 1. A TRP 2 sends second DCI to the terminal 14 via a PDCCH 2 to schedule the terminal 14 to use a panel 2 to send a PUSCH 2 to the TRP 2.

In some embodiments, the above TRP1 and TRP2 may be two TRPs of the same cell, or two TRPs of different cells.

In the uplink transmission method provided in the disclosure, a repetition transmission is performed on at least one uplink channel among at least two uplink channels on at least two time-domain positions, and a STxMP is performed on the at least two uplink channels on at least one time-domain position among the at least two time-domain positions. The at least two uplink channels correspond one-to-one to at least two pieces of beam information. For example, N uplink channels correspond one-to-one to N pieces of beam information. In some embodiments, the beam information is at least one of an antenna panel, a TRP, or a beam. For example, a beam refers to a beam, or is referred to as spatial relation information, spatial setting, spatial receive (Rx) parameter, transmit (Tx) spatial filter, spatial domain receive filter, transmission configuration indication (TCI) state, and Quasi CoLocation Type D (QCL Type D).

For example, N uplink channels correspond one-to-one to N antenna panels, or N uplink channels correspond one-to-one to N TRPs, or N uplink channels correspond one-to-one to N beams, where N is greater than or equal to 2.

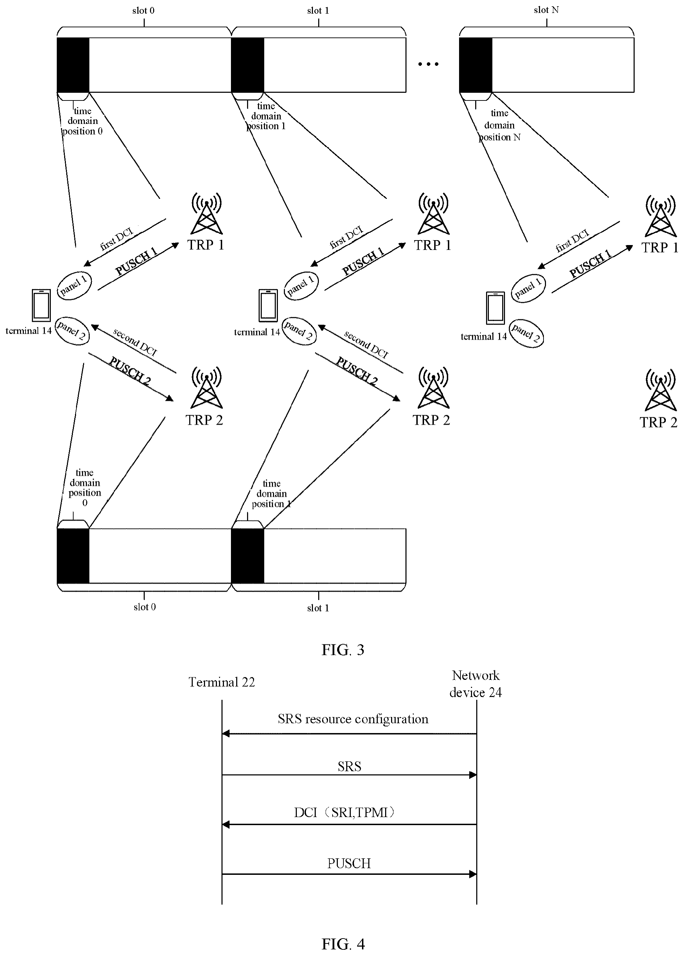

For example, as shown in FIG. 3, a TRP 1 sends first DCI to a terminal 14 via a PDCCH 1, to schedule the terminal 14 to use a panel 1 to repeatedly send a PUSCH 1 to the TRP 1 on N+1 time-domain positions, where N is a positive integer greater than 1. A TRP 2 sends second DCI to the terminal 14 via a PDCCH 2, to schedule the terminal 14 to use a panel 2 to repeatedly send a PUSCH 2 to the TRP 2 on two time-domain positions, i.e. a time-domain position 0 and a time-domain position 1.

For example, in a STxMP scenario, an uplink transmission process includes: a codebook-based uplink transmission process and a non-codebook-based uplink transmission process.

FIG. 4 is a schematic diagram illustrating a codebook-based uplink transmission process according to an example embodiment of the disclosure, which includes a terminal 22 and a network device 24.

In the codebook-based uplink transmission process, the network device 24 firstly sends a sounding reference signal (SRS) resource configuration to the terminal 22, and the SRS resource configuration includes at least one SRS resource and a time-frequency resource position of each SRS resource. Then, the terminal 22 sends at least one SRS to the network device 24 based on the SRS resource configuration. The network device 24 obtains a channel condition of each uplink channel based on the received at least one SRS, and then provides DCI to the terminal 22. The DCI at least includes an SRS resource indication (SRI) and a transmitted precoding matrix indicator (TPMI). Finally, the terminal 22 sends a PUSCH to the network device 24 based on the TPMI and the SRI.

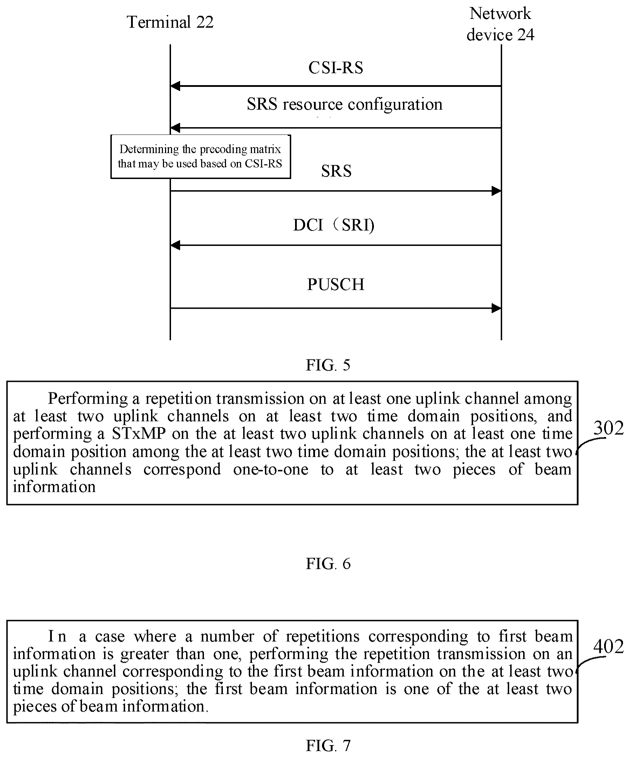

FIG. 5 is a schematic diagram illustrating a non-codebook-based uplink transmission process according to an example embodiment of the disclosure, which includes a terminal 22 and a network device 24.

In the non-codebook-based uplink transmission process, a precoding matrix is no longer limited in a fixed candidate set. The network device 24 firstly sends a channel state information-reference symbol (CSI-RS) and SRS resource configuration information to the terminal 22. The SRS resource configuration includes at least one SRS resource and the time-frequency resource position of each SRS resource. Then, the terminal 22 independently calculates, based on a measurement result of the CSI-RS, to obtain at least one precoding matrix possibly used via an algorithm such as a singular value decomposition algorithm. Then, the terminal 22 sends at least one SRS to the network device 24 based on the SRS resource configuration. The network device 24 obtains a channel condition of each uplink channel based on the received at least one SRS, and further provides DCI to the terminal 22. The DCI at least includes an SRI. Finally, the terminal 22 determines, according to the SRI, a precoding matrix to be used this time from the at least one precoding matrixes possibly used, and sends a PUSCH to the network device 24 according to the SRI and the precoding matrix used this time.

FIG. 6 is a schematic diagram illustrating an uplink transmission method according to an example embodiment of the disclosure. The method is performed by a terminal in the communication system shown in FIG. 1, and includes the following steps.

At step 302, the terminal performs a repetition transmission on at least one uplink channel among at least two uplink channels on at least two time-domain positions, and performs a STxMP on the at least two uplink channels on at least one time-domain position among the at least two time-domain positions; in which the at least two uplink channels correspond one-to-one to at least two pieces of beam information.

The terminal transmits the at least two uplink channels via the at least two pieces of beam information. For example, a number of pieces of beam information may be 2 or 4. For example, a number of antenna panels ("panels" for short) may be 2 or 4.

The simultaneous transmission is performed, according to the at least two pieces of beam information, on the uplink channel on the at least one time-domain position among the at least two time-domain positions. Different beam information is used for simultaneous transmission of different uplink channels. For example, the at least two pieces of beam information include first beam information and second beam information, such as a first antenna panel and a second antenna panel, or a first beam and a second beam, or a first TRP and a second TRP. On a first time-domain position among the at least two time-domain positions, a first uplink channel is transmitted correspondingly associated with the first beam information, and a second uplink channel is transmitted correspondingly associated with the second beam information. That is, on the same time-domain position, the uplink channels respectively corresponding to the first beam information and the second beam information are simultaneously transmitted.

It should be noted that the uplink channel is transmitted correspondingly associated with the beam information, i.e., the beam information is associated correspondingly with the uplink channel, and the uplink channel is transmitted via the beam information. It may also be described as that the uplink channel is transmitted according to the beam information.

For example, at least two pieces of data are transmitted on the uplink channel via at least two pieces of beam information, and the at least two pieces of beam information correspond one-to-one to the at least two pieces of data. For example, on the at least one time-domain position among the at least two time-domain positions, first data is transmitted on the first uplink channel via the first beam information, and second data is transmitted on the second uplink channel via the second beam information.

In some embodiments, the same data is transmitted separately on the uplink channel via the at least two pieces of beam information. For example, on the at least one time-domain position among the at least two time-domain positions, third data is transmitted on the first uplink channel via the first beam information, and the third data is transmitted on the second uplink channel via the second beam information.

It should be noted that transmitting data on the uplink channel via the beam information may also be described as transmitting the data using the uplink channel via the beam information.

In this embodiment, each beam information may be used to transmit complete data.

In some embodiments, the uplink channel includes at least one of: a PUSCH, or a PUCCH.

In some embodiments, the uplink channel is the PUSCH, and the PUSCH includes at least one of: a dynamic grant PUSCH (DG PUSCH), a configured grant PUSCH type 1 (CG PUSCH Type1), or a configured grant PUSCH Type 2 (CG PUSCH Type2).

In some embodiments, the uplink channel is the PUCCH, and the PUCCH includes at least one of: a PUCCH format 0, a PUCCH format 1, a PUCCH format 2, a PUCCH format 3 or a PUCCH format 4.

The repetition transmission is performed on at least one uplink channel via at least one piece of beam information among the at least two pieces of beam information. The uplink channel corresponding to each of the at least one piece of beam information is transmitted on the at least two time-domain positions.

The repetition transmission is performed on the at least one uplink channel, i.e., the at least one uplink channel is transmitted on each of the at least two time-domain positions. For example, the repetition transmission is performed on the first uplink channel, i.e., the first uplink channel is transmitted on each of the at least two time-domain positions.

In the STxMP scenario, by adopting the above repetition transmission method, the repetition transmission is performed on the uplink channel respectively associated with the at least one piece of beam information among the at least two pieces of beam information. That is, the repetition transmission is performed on the uplink channel via part of the at least two pieces of beam information. For example, in the STxMP scenario, the first uplink channel is transmitted via the first beam information on each of the at least two time-domain positions, and the second uplink channel is transmitted via the second beam information on an initial time-domain position among the at least two time-domain positions.

Alternatively, the repetition transmission is performed on the uplink channel via all of the at least two pieces of beam information. For example, in the STxMP scenario, the first uplink channel is transmitted via the first beam information on each of the at least two time-domain positions, and the second uplink channel is transmitted via the second beam information on each of the at least two time-domain positions.

In some embodiments, the at least two time-domain positions correspond to at least two groups of TOs, each group of TOs among the at least two groups of TOs includes at least two TOs, and the at least two TOs correspond one-to-one to the at least two pieces of beam information. All TOs in each group of TOs are within the same time-domain position. A number of TOs for each group of TOs is the same as a number of pieces of beam information used by the terminal. For example, in a case where the number of pieces of beam information is two, each group of TOs includes two TOs, and the two TOs correspond one-to-one to two pieces of beam information. For example, the first beam information corresponds to the use of a TO1, and the second beam information corresponds to the use of a TO2.

In some embodiments, the at least two TOs included in each group of TOs overlap completely in a time-domain.

In some embodiments, the at least two TOs included in each group of TOs overlap partially in the time-domain.

For example, as shown in FIG. 3, on the time-domain position 0, the panel 1 transmits the PUSCH 1 to the TRP1, and the panel 2 transmits the PUSCH 2 to the TRP2; on the time-domain position, the panel 1 transmits the PUSCH 1 to the TRP1, and the panel 2 transmits the PUSCH 2 to the TRP2; ...; and on a time-domain position N, the panel 1 transmits the PUSCH 1 to the TRP 1, while the panel 2 no longer transmits the PUSCH 2 to the TRP 2, where N is a positive integer greater than 1, such that the repetition transmission and the STxMP of the uplink channel are implemented on a plurality of time-domain positions.

In some embodiments, the at least two uplink channels overlap completely in a time-domain; or the at least two uplink channels overlap partially in the time-domain.

In some embodiments, the at least two uplink channels overlap completely in a frequency domain; or the at least two uplink channels overlap partially in the frequency domain; or the at least two uplink channels do not overlap in the frequency domain.

In summary, according to the uplink transmission method provided by the disclosure, the associated at least two uplink channels are transmitted via the at least two pieces of beam information on the at least one time-domain position among the at least two time-domain positions to implement the STxMP for the uplink channel. The at least one uplink channel among the at least two uplink channels is transmitted on each of the at least two time-domain positions to implement the repetition transmission for the uplink channel. The method not only supports the transmission scheme of the STxMP, but also further supports the repetition transmission of the same uplink channel in the time-domain, which implements the mixed transmission scheme combining the STxMP and the repetition transmission. This scheme is used to support better reliability and uplink coverage performance, and may also achieve the effect of enhancing uplink throughput under reasonable scheduling of the system.

In some embodiments, a network device configures a number of repetitions for the terminal, and the terminal performs the repetition transmission on the uplink channel according to the configured number of repetitions.

In some embodiments, the network device configures, according to M-DCI, the number of repetitions of a plurality of uplink channels for the terminal. For example, the network device configures, via at least two pieces of DCI, the number of repetitions of at least two uplink channels for the terminal, where the at least two pieces of DCI correspond one-to-one to the at least two uplink channels.

In some embodiments, the network device configures, according to M-DCI, the number of repetitions corresponding to a plurality of pieces of beam information for the terminal. For example, the network device configures, via at least two pieces of DCI, the number of repetitions corresponding to at least two pieces of beam information for the terminal, where the at least two pieces of DCI correspond one-to-one to the at least two pieces of beam information.

In some embodiments, among the at least two pieces of beam information, there are different pieces of beam information corresponding to the same number of repetitions; and/or, among the at least two pieces of beam information, there are different pieces of beam information corresponding to different number of repetitions.

The at least two pieces of beam information correspond to the same number of repetitions. That is, all of the at least two pieces of beam information correspond to the same number of repetitions. For example, the at least two pieces of beam information include the first beam information and the second beam information. The number of repetitions corresponding to the first beam information is 4, and the number of repetitions corresponding to the second beam information is 4.

Alternatively, the at least two pieces of beam information correspond to different numbers of repetition. That is, the numbers of repetitions corresponding to each pair among the at least two pieces of beam information are different. For example, the at least two pieces of beam information include the first beam information, the second beam information, and third beam information. The number of repetitions corresponding to the first beam information is 2, the number of repetitions corresponding to the second beam information is 4, and the number of repetitions corresponding to the third beam information is 6.

Alternatively, among the at least two pieces of beam information, some correspond to the same number of repetitions, while others correspond to different numbers of repetitions. For example, at least two antenna panels include a first antenna panel, a second antenna panel and a third antenna panel, or at least two TRPs include a first TRP, a second TRP and a third TRP, or at least two transmission beams include a first transmission beam, a second transmission beam and a third transmission beam. The number of repetitions corresponding to the first beam information is 2, the number of repetitions corresponding to the second beam information is 4, and the number of repetitions corresponding to the third beam information is 4.

Optionally, in a case where there are different pieces of beam information, among the at least two pieces of beam information, corresponding to different numbers of repetition, the terminal determines a maximum number of repetitions, or a minimum number of repetitions, or an average value (rounding the average value to an integer) of the number of repetitions or a median value from at least two numbers of repetitions corresponding to the at least two pieces of beam information. The at least two uplink channels are transmitted according to the maximum number of repetitions, the minimum number of repetitions, the average value of the number of repetitions or the median value. That is, in the case where there are differences in the number of repetitions, the terminal re-determines a number of repetitions, and uniformly adopts this re-determined number of repetitions to transmit a plurality of uplink channels. The above at least two numbers of repetitions correspond one-to-one to the at least two pieces of beam information.

For example, in a case where the uplink transmission is performed on each piece of beam information by using respective corresponding number of repetitions, a repetition transmission process of the uplink channel includes:
in a case where the number of repetitions corresponding to the first beam information is greater than one, performing the repetition transmission on the uplink channel corresponding to the first beam information on the at least two time-domain positions, in which the first beam information is one of the at least two pieces of beam information; and/or
in a case where the number of repetitions corresponding to the second beam information is greater than one, performing the repetition transmission on the uplink channel corresponding to the second beam information on the at least two time-domain positions, in which the second beam information is another one of the at least two pieces of beam information.

For example, taking performing the repetition transmission on the uplink channel corresponding to the first beam information as an example, step 302 may include step 402. As shown in FIG. 7, the step is as follows.

In step 402, in a case where the number of repetitions corresponding to the first beam information is greater than one, the terminal performs the repetition transmission on the uplink channel corresponding to the first beam information on the at least two time-domain positions, in which the first beam information is one of the at least two pieces of beam information.

The first beam information corresponds to the first uplink channel. In the case where the number of repetitions corresponding to the first beam information is greater than one, the terminal transmits the first uplink channel on each of the at least two time-domain positions.

The number of repetitions corresponding to the first beam information is configured by the network device.

In some embodiments, the uplink channel is the PUSCH. In a case where a number of repetitions configured by first DCI among M-DCI is greater than one, the repetition transmission is performed on the uplink channel corresponding to the first beam information on the at least two time-domain positions; in which the first DCI is used to configure the number of repetitions corresponding to the first beam information. In some embodiments, the number of repetitions corresponding to the first beam information is configured by a repetition number parameter (i.e., numberOfRepetitions) included in a time-domain resource allocation (TDRA) in the first DCI.

For example, the terminal receives the first DCI sent by the network device, reads a value of numberOfRepetitions included in the TDRA in the first DCI, and obtains the number of repetitions. In a case where the number of repetitions is greater than one, the terminal performs, on the at least two time-domain positions, the repetition transmission on the first uplink channel via the first beam information.

In some embodiments, the uplink channel is the PUCCH. In a case where the number of repetitions configured correspondingly in a first PUCCH configuration is greater than one, the repetition transmission is performed on the uplink channel corresponding to the first beam information on the at least two time-domain positions; in which the first PUCCH configuration is used to configure the number of repetitions corresponding to the first beam information. In some embodiments, the number of repetitions corresponding to the first beam information is configured by a slot repetition number parameter (nrofSlots) in the first PUCCH configuration.

For example, the terminal receives the first PUCCH configuration sent by the network device, reads a value of nrofSlots included in the first PUCCH configuration, and obtains the number of repetitions. In a case where the number of repetitions is greater than one, the terminal performs the repetition transmission on the first uplink channel via the first beam information on the at least two time-domain positions.

For example, performing the repetition transmission on the second beam information is described as follows.

The second beam information corresponds to the second uplink channel. In a case where the number of repetitions corresponding to the second beam information is greater than one, the terminal performs the transmission on the second uplink channel on each of the at least two time-domain positions.

The number of repetitions corresponding to the second beam information is configured by the network device.

In some embodiments, the uplink channel is the PUSCH. In a case where the number of repetitions configured by second DCI among the M-DCI is greater than one, the repetition transmission is performed on the uplink channel corresponding to the second beam information on the at least two time-domain positions; in which the second DCI is used to configure the number of repetitions corresponding to the second beam information. In some embodiments, the number of repetitions corresponding to the second beam information is configured by numberOfRepetitions includes in the TDRA in the second DCI.

In some embodiments, the uplink channel is the PUCCH. In a case where the number of repetitions configured correspondingly in a second PUCCH configuration is greater than one, the repetition transmission is performed on the uplink channel corresponding to the second beam information on the at least two time-domain positions; in which the second PUCCH configuration is used to configure the number of repetitions corresponding to the second beam information. In some embodiments, the number of repetitions corresponding to the second beam information is configured by nrofslots in the second PUCCH configuration. The first PUCCH configuration is different from the second PUCCH configuration.

In various embodiments of the disclosure, a control resource set pool index (CoresetPoolIndex) parameter is used to distinguish different beam information. For example, the beam information is associated one-to-one with the uplink channel via the CoresetPoolIndex. For example, the beam information is associated one-to-one with the DCI via the CoresetPoolIndex. For another example, the beam information is associated one-to-one with the number of repetitions via the CoresetPoolIndex. For another example, the beam information is associated one-to-one with a type of repetition transmission via the CoresetPoolIndex.

In summary, according to the uplink transmission method provided by the disclosure, the number of repetitions associated with the repetition transmission is configured for each antenna panel of the terminal. In the STxMP scenario, the repetition transmission for the uplink channel is also supported, which implements the mixed transmission scheme combining the STxMP and the repetition transmission. This scheme is used to support better reliability and uplink coverage performance, and may also achieve the effect of enhancing uplink throughput under reasonable scheduling of the system.

In the above embodiments, the type of the repetition transmission for the uplink channel is a repetition type A and/or a repetition type B.

### • PUSCH

An uplink PUSCH time-domain repetition transmission enhancement mode includes: a repetition type A transmission mode and a repetition type B transmission mode.

### 1) The repetition type A transmission mode of the PUSCH

One PUSCH is transmitted in N consecutive slots, that is, N TOs. The transmission starts on a S^{th} symbol in a starting slot. Each TO lasts for L symbols, while N+L does not exceed a slot boundary.

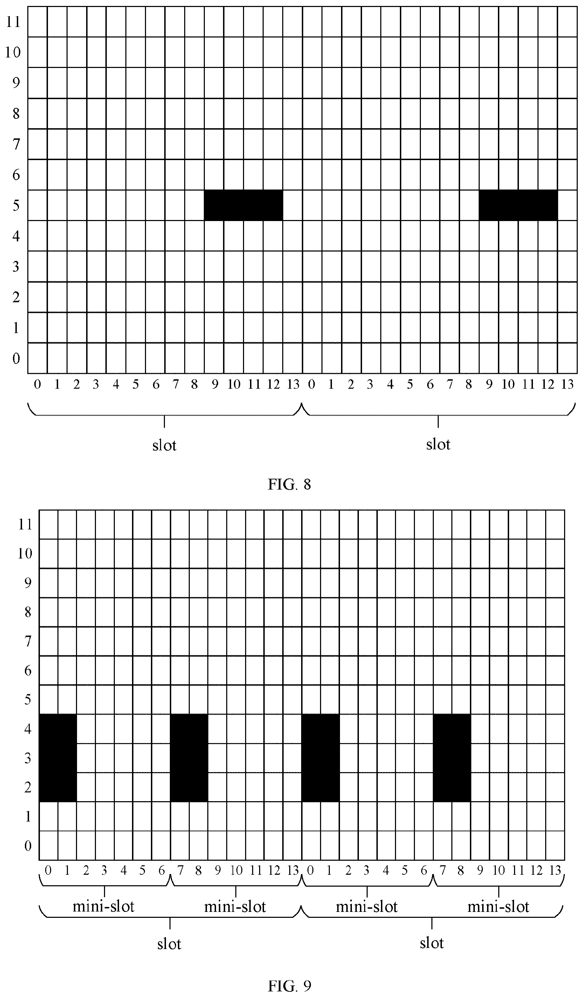

As shown in FIG. 8, the number of repetitions is two, and one TO in each slot occupies four symbols: symbols 9-12, and symbol positions occupied in two slots are the same.

Alternatively, one PUSCH is transmitted in N consecutive mini-slots, that is, N TOs. The transmission starts on a S^{th} symbol in a starting mini-slot. Each TO lasts for L symbols, while N+L does not exceed a mini-slot boundary.

As shown in FIG. 9, the number of repetitions is four, and one TO in each mini-slot occupies two symbols. Symbols occupied by a first mini-slot in each slot are symbols 0-1, and symbols occupied by a second mini-slot are symbols 7-8, both of which are the first and second symbols in the mini-slot.

### 2) The repetition type B transmission mode of the PUSCH

In order to reduce delay and improve reliability, a repetition transmission scheme for the PUSCH in units of mini-slot is supported, and allowing a PUSCH transmission to across slots may further reduce the delay.

In the time-domain, one PUSCH starts transmitting on the S^{th} symbol a in the starting slot, and N TOs (or nominal repetitions) are transmitted continuously. Each TO occupies L symbols back-to-back. The transmission of N+L may cross the slot boundary.

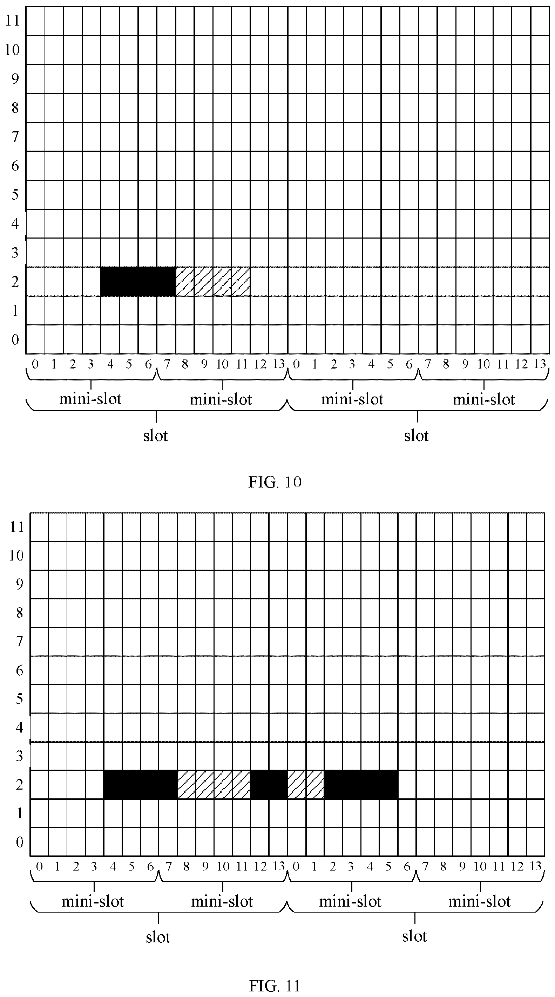

As shown in FIGS. 10-15, in a case where the TO crosses the slot boundary, the transmission is re-divided, corresponding to an actual number of transmissions N, that is, an actual repetition. For the entire transmission, the slot L*N represents a time window length of the PUSCH transmission, and a downlink (DL) symbol is discarded and not used for the PUSCH transmission. The base station may indicate, via a slot form indicator (SFI), that a semi-static flexible symbol is a dynamic uplink (UL) symbol or a dynamic DL symbol. Therefore, the semi-static flexible symbol may be an available symbol or an unavailable symbol for the PUSCH. In a case where there are one or more unavailable symbols, the one or more unavailable symbols need to be discarded, and then the transmission is performed on the remaining available symbols. The base station may further configure, via a signaling, an invalid symbol pattern that is unavailable for the UE. That is, the UE does not transmit uplink data on an invalid symbol indicated by the signaling.

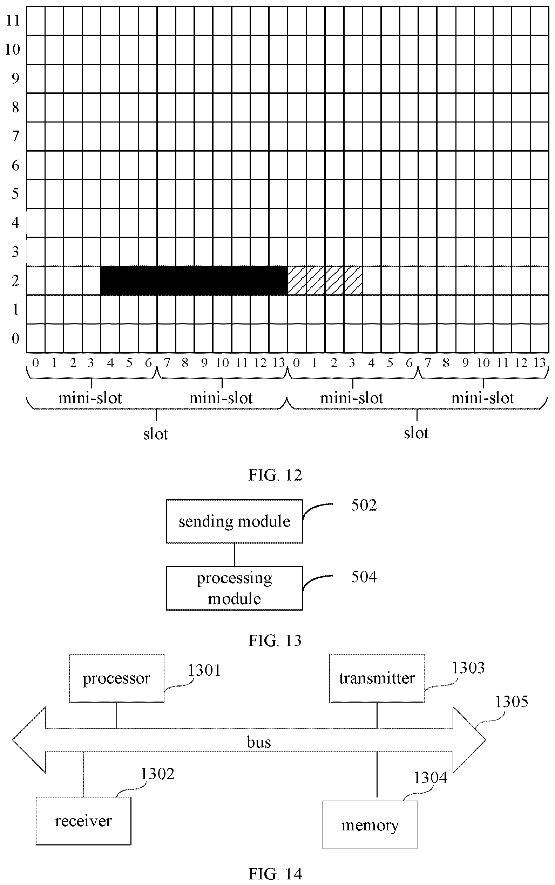

As shown in FIG. 10, N=2, L=4, S=5, that is, the first TO occupies symbols 4-7 within one slot, and the second TO occupies symbols 8-11 within the same slot. As shown in FIG. 11, N=4, L=4, S=5, that is, the first TO occupies symbols 4-7 within one slot, the second TO occupies symbols 8-11 within the same slot, the third TO, cross slots, occupies symbols 12-13 within the previous slot and symbols 0-1 within the subsequent slot, and the fourth TO occupies symbols 2-5 within one slot. As shown in FIG. 12, N=1, L=14, S=5, that is, one TO occupies symbols 4-13 within the previous slot and symbols 0-3 within the subsequent slot.

Transmission parameters of the repetition type A and the repetition type B of the PUSCH are defined as follows.

### Valid combinations of N and L

| PUSCH mapping type | Normal cyclic prefix | | | Extended cyclic prefix | | |
|---|---|---|---|---|---|---|
| | S | L | S+L | S | L | S+L |
| Type A (repetition Type A only) | 0 | {4,...,14} | {4,...,14} | 0 | {4,...,12} | {4,...,12} |
| Type B | {0,...,13} | {1,...,14} | repetition Type A: {1,...,14}; | {0,..., 11} | {1,..12} | repetition Type A: {1,...,12}; |
| | | | repetition Type B: {1,...,27} | | | repetition Type B: {1,...,23} |

In an M-TRP transmission of PDSCH, a cooperative transmission of up to two different downlink TRPs is supported. In the TDM scheme, the transmission is similar to the Type A, which is a slot-level transmission. A mapping method of different beams (a beam direction is indicated as a TCI state) to different repeated TOs may be configured by a higher layer signaling in a semi-static manner to determine a specific transmission mapping scheme for each TB block.

A mapping relationship between the TCI state and the TO mainly includes the following schemes.

Scheme 1: Periodic mapping. Two TCI states are cyclically mapped to a plurality of configured TOs in sequence. For example, in a case of 4 transmissions, a mapping pattern of the TCI state is #1#2#1#2.

Scheme 2: Continuous mapping. Two TCI states are continuously and cyclically mapped to the plurality of configured TOs. For example, in a case of 4 transmissions, a mapping pattern of the TCI state is #1#1#2#2. In a case of more than 4 transmissions, the pattern is repeated. For example, in a case of 8 transmissions, the mapping pattern of the TCI state is #1#1#2#2#1#1#2#2#2.

In some embodiments, the network device configures the repetition type B of the PUSCH for the terminal, and may configure pusch-RepTypeIndicatorDCI-0-1-r16 as pusch-RepTypeB. For example, in the case of the repetition type B of the PUSCH, PUSCHs transmitted on different time-domain positions among at least two time-domain positions are mapped to the same or different time-frequency resources.

### • PUCCH

An enhanced repetition mode of the PUCCH based on M-TRP may be considered as follows modes.
1) An inter-slot repetition mode, which adopts the TDM repetition transmission mode to realize a time-division joint transmission on a plurality of slots in directions of a plurality of beams facing a plurality of TRPs. One PUCCH resource may be used, or two PUCCH resources may be used.
2) An intra-slot repetition mode, which realizes the time-division joint transmission on different mini-slots within one slot in the directions of a plurality of beams facing a plurality of TRPs. One PUCCH resource may be used, or two PUCCH resources may be used.

In some embodiments, among the at least two pieces of beam information, there are different pieces of beam information corresponding to the same type of repetition transmission; and/or, among the at least two pieces of beam information, there are different pieces of beam information corresponding to different types of repetition transmission.

In summary, according to the uplink transmission method provided by the disclosure, different repetition transmission modes for the uplink channel are provided. In the STxMP scenario, the repetition transmission for the uplink channel is supported to implement the mixed transmission scheme combining the STxMP and the repetition transmission. This scheme supports better reliability and uplink coverage performance, and achieves the effect of enhancing uplink throughput under reasonable scheduling of the system.

In some embodiments, the uplink channel is the PUCCH. For each piece of beam information, conflict processing is performed on different PUCCHs by adopting a corresponding respective multiplexing or discarding rule.

For example, each piece of beam information corresponds to a respective multiplexing rule and/or discarding rule.

Among the at least two pieces of beam information, there are different pieces of beam information corresponding to the same multiplexing rule; and/or among the at least two pieces of beam information, there are different pieces of beam information corresponding to different multiplexing rules.

Among the at least two pieces of beam information, there are different pieces of beam information corresponding to the same discarding rule; and/or among the at least two pieces of beam information, there are different pieces of beam information corresponding to different discarding rules.

For example, the first beam information corresponds to a first multiplexing rule, the second beam information corresponds to a second multiplexing rule, and the first multiplexing rule and the second multiplexing rule may be the same or different.

The multiplexing rule refers to that when there are H conflicting uplink channels on a single piece of beam information, the H uplink channels are merged into one uplink channel for use, where H is a positive integer greater than 1. The discarding rule refers to that when there are H conflicting uplink channels on a single piece of beam information, H-1 of the H conflicting uplink channels are discarded, or all of the H conflicting uplink channels are discarded, where H is a positive integer greater than 1.

In summary, according to the conflict processing method for the uplink channel provided by the disclosure, in the STxMP scenario, when there are a plurality of conflicting uplink channels on a single piece of beam information, the above processing method may be adopted to support the implementation of the repetition transmission of the uplink channel on the beam information.

FIG. 13 is a block diagram illustrating an uplink transmission apparatus according to an example embodiment of the disclosure. The apparatus may be implemented as part or all of a terminal via software or hardware or a combination of the two. The apparatus includes:
a sending module 502 configured to perform a repetition transmission on at least one uplink channel among at least two uplink channels on at least two time-domain positions, and perform a STxMP on the at least two uplink channels on at least one time-domain position among the at least two time-domain positions; in which the at least two uplink channels correspond one-to-one to at least two pieces of beam information, and the beam information is at least one of an antenna panel, a TRP, or a beam.

In some embodiments, the sending module 502 is configured to, in a case where a number of repetitions corresponding to first beam information is greater than one, perform the repetition transmission on an uplink channel corresponding to the first beam information on the at least two time-domain positions;
in which the first beam information is one of the at least two pieces of beam information.

In some embodiments, the uplink channel is a PUSCH; and
the sending module 502 is configured to, in a case where a number of repetitions configured by first DCI among M-DCI is greater than one, perform the repetition transmission on the uplink channel corresponding to the first beam information on the at least two time-domain positions;
in which the first DCI is used to configure the number of repetitions corresponding to the first beam information.

In some embodiments, the number of repetitions is configured by a repetition number parameter within a TDRA in the first DCI.

In some embodiments, the uplink channel is a PUCCH; and
the sending module 502 is configured to, in a case where a number of repetitions configured correspondingly in a first PUCCH configuration is greater than one, perform the repetition transmission on the uplink channel corresponding to the first beam information on the at least two time-domain positions;
in which the first PUCCH configuration is used to configure the number of repetitions corresponding to the first beam information.

In some embodiments, the number of repetitions is configured by a slot repetition number parameter in the first PUCCH configuration.

In some embodiments, the sending module 502 is configured to, on a first time-domain position among the at least two time-domain positions, transmit a first uplink channel correspondingly associated with first beam information and transmit a second uplink channel correspondingly associated with second beam information.

In some embodiments, there are different pieces of beam information, among the at least two pieces of beam information, corresponding to the same numbers of repetition; and/or there are different pieces of beam information, among the at least two pieces of beam information, corresponding to different numbers of repetition.

In some embodiments, a type of repetition transmission is a repetition type A and/or a repetition type B.

In some embodiments, the at least two uplink channels overlap completely in a time-domain; or the at least two uplink channels overlap partially in a time-domain.

In some embodiments, the at least two uplink channels completely overlap in a frequency domain; or the at least two uplink channels partially overlap in a frequency domain; or the at least two uplink channels do not overlap in a frequency domain.

In some embodiments, the at least two time-domain positions correspond to at least two groups of TOs, each group of TOs in the at least two groups of TOs includes at least two TOs, and the at least two TOs correspond one-to-one to the at least two pieces of beam information.

In some embodiments, the at least two TOs partially or completely overlap in the time-domain.

In some embodiments, the at least two uplink channels include at least one of:
a DG PUSCH, a CG PUSCH type 1, or a CG PUSCH type 2.

In some embodiments, the uplink channel is the PUCCH; and
the apparatus further includes a processing module 504;
in which the processing module 504 is configured to perform conflict processing on different PUCCHs by adopting a multiplexing or discarding rule corresponding to each piece of beam information respectively.

FIG. 14 is a schematic diagram illustrating a terminal according to an example embodiment of the disclosure. The terminal includes: a processor 1301, a receiver 1302, a transmitter 1303, a memory 1304 and a bus 1305.

The processor 1301 includes one or more processing cores. The processor 1301 is configured to execute various functional applications and information processing by running software programs and modules.

The receiver 1302 and the transmitter 1303 may be implemented as a communication component, which may be a communication chip.

The memory 1304 is connected to the processor 1301 via the bus 1305.

The memory 1304 may be configured to store at least one instruction, and the processor 1301 may be configured to execute the at least one instruction to implement various steps in the above method embodiments.

Moreover, the memory 1304 may be implemented using any type of volatile or non-volatile memory devices, or a combination thereof. The volatile or non-volatile memory devices include but are not limited to: a magnetic or optical disk, an electrically erasable programmable read-only memory (EEPROM), an erasable programmable read-only memory (EPROM), a static random-access memory (SRAM), a read-only memory (ROM), a magnetic memory, a flash memory and a programmable read-only memory (PROM).

In example embodiments, there is also provided a non-transitory computer readable storage medium including instructions, such as included in the memory, executable by the processor of the terminal, for performing the above uplink transmission method. For example, the non-transitory computer-readable storage medium may be a ROM, a random-access memory (RAM), a compact disc read only memory (CD-ROM), a magnetic tape, a floppy disc, an optical data storage device, and the like.

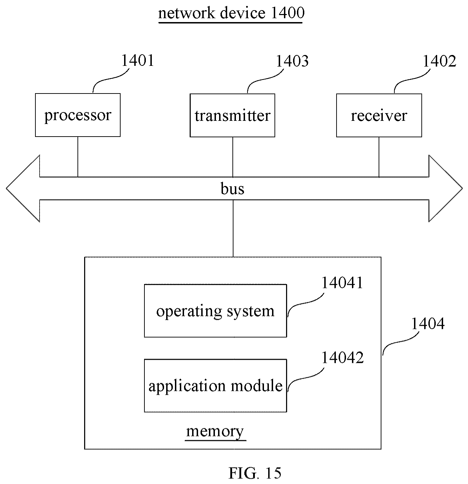

FIG. 15 is a schematic diagram illustrating a network device 1400 according to an example embodiment of the disclosure. The network device 1400 may be a base station.

The network device 1400 may include: a processor 1401, a receiver 1402, a transmitter 1403, and a memory 1404. The receiver 1402, the transmitter 1403, and the memory 1404 are each coupled to the processor 1401 via a bus.

The processor 1401 includes one or more processing cores, and the processor 1401 is configured to execute software programs and modules to perform the method for configuring an SRS resource according to embodiments of the disclosure. The memory 1404 may be configured to store software programs as well as modules. Specifically, the memory 1404 may store an operating system 14041, and an application module 14042 required for at least one function. The receiver 1402 is configured to receive communication data transmitted by other devices, and the transmitter 1403 is configured to send the communication data to other devices.

In an example embodiment of the disclosure, there is provided a computer-readable storage medium having stored therein at least one instruction, at least one program, a code set, or an instruction set, which is configured to be loaded and executed by a processor to implement the uplink transmission method according to the above method embodiments.

In an example embodiment of the disclosure, there is provided a computer program product including computer instructions stored in a computer-readable storage medium, and the computer instructions, when read by a processor of a computer device from the computer-readable storage medium and executed by the processor, cause the computer device to perform the uplink transmission method according to the above method embodiments.

It should be understood that the term "a plurality of/multiple" mentioned herein refers to two or more. Other embodiments of the disclosure will be apparent to those skilled in the art from consideration of the specification and practice of the disclosure disclosed here. The disclosure is intended to cat any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. An uplink transmission method, comprising:
performing a repetition transmission on at least one uplink channel among at least two uplink channels on at least two time-domain positions, and performing a simultaneous transmission across multi-panel (STxMP) on the at least two uplink channels on at least one time-domain position among the at least two time-domain positions;
wherein the at least two uplink channels correspond one-to-one to at least two pieces of beam information, and the beam information is at least one of an antenna panel, a transmission and reception point (TRP), or a beam.

2. The uplink transmission method of claim 1, wherein performing the repetition transmission on the at least one uplink channel among the at least two uplink channels on the at least two time-domain positions comprises:
in a case where a number of repetitions corresponding to first beam information is greater than one, performing the repetition transmission on an uplink channel corresponding to the first beam information on the at least two time-domain positions;
wherein the first beam information is one of the at least two pieces of beam information.

3. The uplink transmission method of claim 2, wherein the uplink channel is a physical uplink shared channel (PUSCH); and
in the case where the number of repetitions corresponding to the first beam information is greater than one, performing the repetition transmission on the uplink channel corresponding to the first beam information on the at least two time-domain positions comprises:
in a case where a number of repetitions configured by first downlink control information (DCI) among multi-DCI (M-DCI) is greater than one, performing the repetition transmission on the uplink channel corresponding to the first beam information on the at least two time-domain positions;
wherein the first DCI is used to configure the number of repetitions corresponding to the first beam information.

4. The uplink transmission method of claim 3, wherein the number of repetitions is configured by a repetition number parameter within a time-domain resource allocation (TDRA) in the first DCI.

5. The uplink transmission method of claim 2, wherein the uplink channel is a physical uplink control channel (PUCCH); and
in the case where the number of repetitions corresponding to the first beam information is greater than one, performing the repetition transmission on the uplink channel corresponding to the first beam information on the at least two time-domain positions comprises:
in a case where a number of repetitions configured correspondingly in a first PUCCH configuration is greater than one, performing the repetition transmission on the uplink channel corresponding to the first beam information on the at least two time-domain positions;
wherein the first PUCCH configuration is used to configure the number of repetitions corresponding to the first beam information.

6. The uplink transmission method of claim 5, wherein the number of repetitions is configured by a slot repetition number parameter in the first PUCCH configuration.

7. The uplink transmission method of any one of claims 1 to 6, wherein performing the STxMP on the at least two uplink channels on the at least one time-domain position among the at least two time-domain positions comprises:
on a first time-domain position among the at least two time-domain positions, transmitting a first uplink channel correspondingly associated with first beam information and transmitting a second uplink channel correspondingly associated with second beam information.

8. The uplink transmission method of any one of claims 1 to 6, wherein
there are different pieces of beam information, among the at least two pieces of beam information, corresponding to different numbers of repetition.

9. The uplink transmission method of any one of claims 1 to 6, wherein a type of repetition transmission is a repetition type A and/or a repetition type B.

10. The uplink transmission method of any one of claims 1 to 6, wherein
the at least two uplink channels overlap completely in a time-domain; or
the at least two uplink channels overlap partially in a time-domain.

11. The uplink transmission method of any one of claims 1 to 6, wherein
the at least two uplink channels overlap completely in a frequency domain; or
the at least two uplink channels overlap partially in a frequency domain.

12. The uplink transmission method of any one of claims 1 to 6, wherein the at least two time-domain positions correspond to at least two groups of transmission occasions (TOs), each group of TOs in the at least two groups of TOs comprises at least two TOs, and the at least two TOs correspond one-to-one to the at least two pieces of beam information.

13. The uplink transmission method of claim 12, wherein the at least two TOs partially or completely overlap in a time-domain.

14. The uplink transmission method of any one of claims 1 to 4, wherein the at least two uplink channels comprise at least one of:
a dynamic grant (DG) PUSCH, a configured grant (CG) PUSCH type 1, or a CG PUSCH type 2.

15. The uplink transmission method of claim 5 or 6, wherein the uplink channel is the PUCCH; and
the method further comprises:
performing conflict processing on different PUCCHs by adopting a multiplexing or discarding rule corresponding to each piece of beam information respectively.

16. An uplink transmission apparatus, comprising:
a sending module configured to perform a repetition transmission on at least one uplink channel among at least two uplink channels on at least two time-domain positions, and perform a STxMP on the at least two uplink channels on at least one time-domain position among the at least two time-domain positions; wherein the at least two uplink channels correspond one-to-one to at least two pieces of beam information, and the beam information is at least one of an antenna panel, a TRP, or a beam.

17. A terminal, comprising:
a processor; and
a transceiver connected to the processor;
wherein the processor is configured to load and execute executable instructions to implement the uplink transmission method of any one of claims 1 to 15.

18. A chip, wherein the chip comprises a programmable logic circuit and/or program instructions, and when the chip runs, the chip is configured to implement the uplink transmission method of any one of claims 1 to 15.

19. A computer-readable storage medium storing at least one instruction, at least one program, a code set or an instruction set, wherein the at least one instruction, the at least one program, the code set or the instruction set is loaded and executed by a processor to implement the uplink transmission method of any one of claims 1 to 15.

20. A computer program product comprising computer instructions stored in a computer-readable storage medium, wherein a processor of a computer device reads the computer instructions from the computer-readable storage medium, and the processor executes the computer instructions to cause the computer device to execute the uplink transmission method of any one of claims 1 to 15.
